(19) Europäisches Patentamt
European Patent Office
Office européen des brevets

(11) EP 3 952 501 A1

(12) EUROPEAN PATENT APPLICATION
published in accordance with Art. 153(4) EPC

(43) Date of publication:
09.02.2022 Bulletin 2022/06

(21) Application number: 19920718.4

(22) Date of filing: 18.12.2019

(51) International Patent Classification (IPC):
H04W 72/04 (2009.01)     H04W 74/08 (2009.01)

(52) Cooperative Patent Classification (CPC):
H04W 72/04; H04W 74/08

(86) International application number:
PCT/JP2019/049540

(87) International publication number:
WO 2020/194924 (01.10.2020 Gazette 2020/40)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 27.03.2019 JP 2019061499

(71) Applicant: Panasonic Intellectual Property
Corporation
of America
Torrance, CA 90504 (US)

(72) Inventors:
• YAMAMOTO, Tetsuya
Osaka-shi, Osaka 540-6207 (JP)
• NISHIO, Akihiko
Osaka-shi, Osaka 540-6207 (JP)
• SUZUKI, Hidetoshi
Osaka-shi, Osaka 540-6207 (JP)
• LI, Yihui
Singapore 469332 (SG)

(74) Representative: Grünecker Patent- und
Rechtsanwälte
PartG mbB
Leopoldstraße 4
80802 München (DE)

(54) TERMINAL AND TRANSMISSION METHOD

(57) This terminal improves the efficiency of random access processes. In a terminal (200), a control unit (209) determines, on the basis of parameters respectively set for each of a plurality of terminals, the resource to use to transmit a response signal to a downlink signal for the plurality of terminals, and a transmission unit (218) transmits the response signal using the resource.

FIG. 5

**Description**

Technical Field

The present disclosure relates to a terminal and a transmission method.

Background Art

In 3rd Generation Partnership Project (3GPP), the specification for Release 15 New Radio access technology (NR) has been completed for realization of the 5th Generation mobile communication systems (5G). NR supports functions for realizing Ultra Reliable and Low Latency Communication (URLLC) in conjunction with high speed and high capacity that are basic requirements for enhanced Mobile Broadband (eMBB) (see, e.g., Non-Patent Literatures (hereinafter referred to as "NPLs") 1 to 7).

Citation List

Non-Patent Literature

NPL 1
3GPP TS 38.211 V15.4.0, "NR; Physical channels and modulation (Release 15)," December 2018.
NPL 2
3GPP TS 38.212 V15.4.0, "NR; Multiplexing and channel coding (Release 15)," December 2018.
NPL 3
3GPP TS 38.213 V15.4.0, "NR; Physical layer procedure for control (Release 15)," December 2018.
NPL 4
3GPP TS 38.214 V15.4.0, "NR; Physical layer procedures for data (Release 15)," December 2018.
NPL 5
3GPP, TS38.300 V15.4.0, "NR; NR and NG-RAN overall description; Stage 2 (Release 15)," December 2018.
NPL 6
3GPP, TS38.321 V15.4.0, "NR; Medium access control (MAC) protocol specification (Release 15)," December 2018.
NPL 7
3GPP, TS38.331 V15.4.0, "NR; Radio resource control (RRC) protocol specification (Release 15)," December 2018.
NPL 8
B. Bertenyi, S. Nagata, H. Kooropaty, X. Zhou, W. Chen, Y. Kim, X. Dai, and X. Xu, "5G NR radio interface," Journal of ICT, Vol. 6 and 2, pp. 31-58, 2018.
NPL 9
RP-182881, "New work item: 2-step RACH for NR," ZTE Corporation, Sanechips, December 2018.

Summary of Invention

However, random access processing has not comprehensively been studied.
One non-limiting and exemplary embodiment of the present disclosure facilitates providing a terminal and a transmission method capable of improving the efficiency of random access processing.
A terminal according to an embodiment of the present disclosure includes: control circuitry, which, in operation, determines, based on a parameter configured for each of a plurality of the terminals, a resource used for transmission of a response signal for a downlink signal addressed to the plurality of terminals; and transmission circuitry, which, in operation, transmits the response signal in the resource.
Note that these generic or specific aspects may be achieved by a system, an apparatus, a method, an integrated circuit, a computer program, or a recoding medium, and also by any combination of the system, the apparatus, the method, the integrated circuit, the computer program, and the recoding medium.
According to an exemplary embodiment of the present disclosure, it is possible to improve the efficiency of random access processing.
Additional benefits and advantages of the disclosed exemplary embodiments will become apparent from the specification and drawings. The benefits and/or advantages may be individually obtained by the various embodiments and features of the specification and drawings, which need not all be provided in order to obtain one or more of such benefits and/or advantages.

Brief Description of Drawings

FIG. 1 illustrates an exemplary 4-step Random access procedure;

FIG. 2 illustrates an exemplary 2-step Random access procedure;

FIG. 3 is a block diagram illustrating a configuration example of a part of a terminal according to Embodiment 1;

FIG. 4 is a block diagram illustrating a configuration example of a base station according to Embodiment 1;

FIG. 5 is a block diagram illustrating a configuration example of the terminal according to Embodiment 1;

FIG. 6 is a sequence diagram illustrating an operation example of the base station and the terminal according to Embodiment 1;

FIG. 7 illustrates an exemplary 2-step Random access procedure according to Embodiment 1;

FIG. 8 illustrates another exemplary 2-step Random access procedure according to Embodiment 1;

FIG. 9 illustrates an exemplary configuration of Message B; and

FIG. 10 illustrates another exemplary configuration of Message B.

Description of Embodiments

Hereinafter, embodiments of the present disclosure will be described in detail with reference to the accompanying drawings.

[Random access procedure]

In Release 15 NR, a terminal (also referred to as "mobile station" or "User Equipment (UE)") transmits a random access signal (also referred to as "Random Access Channel (RACH)" or "Physical RACH (PRACH)") to a base station (also referred to as "gNB" or "eNB"), for example, in the following cases:

(1) At the time of initial access (e.g., when transiting from an RRC_IDLE state to an RRC CONNECTED state)

(2) When resuming from an RRC_INACTIVE state to the RRC_CONNECTED state

(3) When downlink data or uplink data is generated during connection (e.g., when an uplink synchronization status is "non-synchronized" in the RRC_CONNECTED status)

(4) When requesting on-demand System Information (SI)

(5) When recovering from beam-connection failure (Beam failure recovery (BFR)).

By the transmission of the random access channel signal, connection or reestablishment of synchronization by the terminal with the base station is attempted. A series of operations performed for such connection or reestablishment of synchronization by the terminal with the base station are called a "Random access procedure."

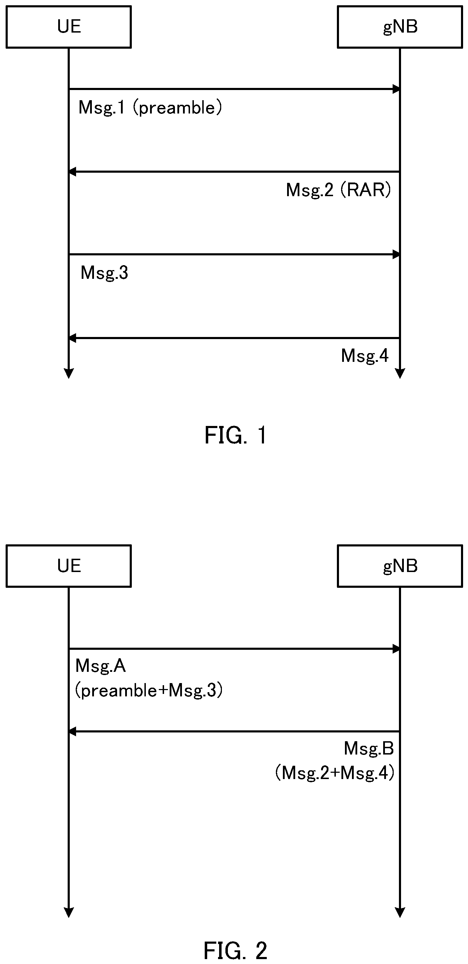

In Release 15 NR, the Random access procedure is composed of, for example, four steps illustrated in FIG. 1 (referred to as "4-step Random access procedure" or "4-step RACH procedure") (see, e.g., NPL 8).

<Step 1: Transmission of Message 1>

The terminal (e.g., UE) randomly selects a PRACH preamble resource to be actually used, from a set of resource candidates (e.g., resources specified by a combination of time resources, frequency resources, and sequence resources) for a preamble signal (hereinafter, referred to as "RACH preamble," "PRACH preamble," or simply as "preamble"). Then, the terminal transmits the PRACH preamble to the base station (e.g., gNB) using the selected PRACH preamble resource. The PRACH preamble may be referred to as "Message 1," for example.

<Step 2: Transmission of Message 2>

When detecting the PRACH preamble, the base station transmits a RACH response (also referred to as "Random Access Response (RAR)"). The RAR may be referred to as "Message 2," for example. Note that, at this point, the base station cannot identify the terminal having transmitted the PRACH preamble. Thus, the RAR is transmitted, for example, entirely in a cell covered by the base station.

The RAR includes, for example, information on a resource (uplink resource) used by the terminal for transmission of an uplink signal (Step 3: transmission of Message 3), or information on a transmission timing of uplink transmission by the terminal. Here, when the terminal having transmitted the PRACH preamble does not receive the RAR within a specified period (e.g., called a RAR reception window) starting from the transmission timing of the PRACH preamble, the terminal again selects the PRACH preamble resource and transmits the PRACH preamble (in other words, retransmission of Message 1).

<Step 3: Transmission of Message 3>

The terminal transmits "Message 3" including, for example, an Radio Resource Control (RRC) connection request, a scheduling request, or the like using an uplink resource indicated by the base station by the RAR

<Step 4: Transmission of Message 4>

The base station transmits, to the terminal, a message (called "Message 4") including identification information (e.g., UE-ID) for identifying the terminal. The base station transmits Message 4 to confirm that there is no contention between multiple terminals (contention resolution). Note that, for example, a Cell-Radio Network Temporary Identifier (C-RNTI), Temporary C-RNTI, or the like may be used as the UE-ID.

One example of the 4-step Random access procedure has been described above.

As for Release 16 NR, in order to efficiently perform connection or reestablishment of synchronization by the terminal with the base station with low latency, a Random access procedure composed of two steps, for example, illustrated in FIG. 2 (which may also be referred to as "2-step Random access procedure" or "2-step RACH procedure") has been studied (e.g., see NPL 9).

<Step 1: Transmission of Message A>

The terminal transmits, to the base station, a message (hereinafter, referred to as "Message A") including information corresponding to Message 1 (in other words, preamble) and Message 3 corresponding to Step 1 and Step 3 of the 4-step Random access procedure (see, e.g., FIG. 1).

<Step 2: Transmission of Message B>

When detecting Message A, the base station transmits Message B. Message B includes, for example, information corresponding to Message 2 or Message 4 of the 4-step Random access procedure (see, e.g., FIG. 1) (e.g., the information of one or both of Messages 2 and 4).

[Retransmission Control in Random Access Procedure]

In the 4-step Random access procedure, transmission of Message 2 is a group-cast (or multicast) transmission. In Message 2, for example, a Medium Access Control layer Protocol Data Unit (MAC PDU) includes a MAC RAR (or MAC subPDU) to one or more terminals. Further, Hybrid Automatic Repeat Request (HARQ), which is a retransmission control, is not applied to Message 2.

Further, in the 4-step Random access procedure, transmission of Message 4 is a unicast transmission, and HARQ is applied to Message 4.

On the other hand, in the 2-step Random access procedure, Message B includes: a MAC PDU including at least a RACH response (e.g., RAR); and a MAC PDU including a message (e.g., a Contention resolution MAC CE) including identification information (e.g., a UE-ID) for identifying a terminal.

For example, when the transmission of Message B is the unicast transmission like Message 4 in the 4-step Random access procedure, base station 100 schedules, for all terminals having performed random access, Message B by a downlink control channel (e.g., Physical Downlink Control Channel (PDCCH)). In this case, overhead of the downlink control channel can increase with increasing number of terminals performing random access, for example.

Accordingly, it is assumed that the group-cast transmission is applied to the transmission of Message B like to Message 2 in the 4-step Random access procedure. It is thus possible to reduce the overhead of the downlink control channel.

Further, in addition to the MAC PDU including the RAR and the MAC PDU including the UE-ID described above, Message B may include, for example, a MAC PDU including a Radio Resource Control (RRC) signal relating to RRC connection, RRC resumption, and RRC reconnection. When the MAC PDU including the RRC signal is included in Message B, it is possible to further reduce latency in the 2-step Random access procedure.

However, the data amount of the RRC signal is larger as compared with other signals. Therefore, it is assumed that the spectral efficiency of downlink resources is improved, for example, by applying HARQ to Message B like to Message 4 in the 4-step Random access procedure. When HARQ is applied to Message B, the terminal transmits a response signal (e.g., Acknowledgement/Negative Acknowledgment (ACK/NACK)) indicating an error detection result of detection of downlink data (e.g., RRC signal) to the base station in the uplink.

However, the method for transmitting an ACK/NACK signal for Message B transmitted by group-cast transmission in the 2-step Random access procedure has not been fully considered.

For example, in Release 15 NR, allocation of resources of an uplink control channel (e.g., Physical Uplink control channel (PUCCH)) (hereinafter, referred to as PUCCH resources) for transmitting an ACK/NACK signal for Message 4 was introduced (see, e.g., NPL 3).

For example, using a cell-specific higher layer signalling (e.g., Remaining Minimum System Information (RMSI)) such as a System Information Block (SIB), the base station indicates the terminal, in advance, of resource configuration (e.g., PUCCH resource set) indicating a combination of a plurality of parameters relevant to the PUCCH resources. For example, in Release 15 NR, the PUCCH resource set includes 16 combinations of the parameters relevant to the PUCCH resources.

Further, the base station selects, from the PUCCH resource set, one combination of the parameters relevant to the PUCCH resources actually used by the terminal, based on some bits within the PDCCH for which Message 4 is scheduled (e.g., 3 bits in Release 15 NR) and based on a Control Channel Element (CCE) number that is PDCCH resource allocation information.

For example, combination $r_{PUCCH}$ (e.g., 16 combinations of 0th to 15th combinations) of the parameters relevant to the PUCCH resources is given by the following equation:

$$r_{PUCCH} = ceiling(2n_{CCE}/N_{CCE}) + 2\Delta_{PRI} \qquad \dots (Equation\ 1).$$

In Equation 1, $n_{CCE}$ represents the CCE number, $N_{CCE}$ represents the number of CCEs, and $\Delta_{PRI}$ represents a value (e.g., any of 0 to 7) that is explicitly indicated by some bits (e.g., 3 bits) of the PDCCH.

Here, since the transmission of Message 4 is the unicast transmission, Message 4 for each terminal is scheduled by a different PDCCH. Therefore, the PUCCH resources for ACK/NACK signals for Message 4 do not collide with one another between terminals, for example, when the base station appropriately configures the combination of the parameters relevant to the PUCCH resources as given by Equation 1 and $\Delta_{PRI}$ indicated by the PDCCHs.

Meanwhile, when the transmission of Message B is the group-cast transmission, MAC PDUs for a plurality of terminals are included in Message B. Therefore, depending on the channel state for each terminal, there is a possibility that a terminal capable of correctly decoding the MAC PDU and a terminal failing to decode the MAC PDU intermingle in the cell. In other words, the decoding result (in other words, ACK/NACK signal) for the MAC PDU (e.g., MAC PDU including the RRC signal) in Message B for each of the terminals may differ between the terminals.

However, when the transmission of Message B is the group-cast transmission, the base station schedules a single PDCCH for Message B including MAC PDUs addressed to a plurality of terminals. For this reason, for example, in the PUCCH resource allocation for Message 4 in Release 15 NR given in Equation 1, the same PUCCH resources are assigned for all the terminals. Accordingly, when each of the terminals transmits, to the base station, an ACK/NACK signal corresponding to the decoding result for the MAC PDU in Message B all the terminals transmit the ACK/NACK signals in the same PUCCH resources. In other words, the PUCCH resources for the ACK/NACK signals for Message B may collide with one another between the terminals.

For example, when the base station transmits the PDCCH including $\Delta_{PRI}$ for each terminal (see, e.g., Equation 1), it is possible to reduce the collision of PUCCH resources for ACK/NACK signals for Message B between the terminals. However, in this case, the overhead of the PDCCH increases. For example, when $\Delta_{PRI}$ of 3 bits is assumed as in Release 15 NR, the overhead of the number of terminals (in other words, the number of users) $\times$ 3 bits may be caused.

As a solution to the above, an exemplary embodiment of the present disclosure will be described in relation to a transmission method of transmitting an ACK/NACK signal for Message B when transmission of Message B is the group-cast transmission in the 2-step Random access procedure. According to an exemplary embodiment of the present disclosure, it is possible to reduce collision of PUCCH resources between terminals while reducing overhead of a PDCCH.

Hereinafter, embodiments of the present invention will be described in detail.

(Embodiment 1)

[Overview of Communication System]

A communication system according to each embodiment of the present disclosure includes base station 100 and terminal 200.

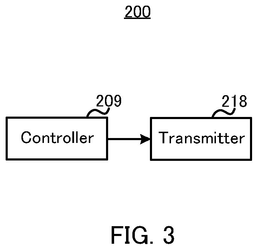

FIG. 3 is a block diagram illustrating a configuration example of a part of terminal 200 according to each embodiment of the present disclosure. In terminal 200 illustrated in FIG. 3, controller 209 (corresponding to the control circuitry) determines, based on a parameter configured for each of a plurality of terminals, a resource used for transmission of a response signal (e.g., ACK/NACK signal) for a downlink signal (e.g., Message B) addressed to the plurality of terminals. Transmitter 218 transmits the response signal in the above-described resource.

[Configuration of Base Station]

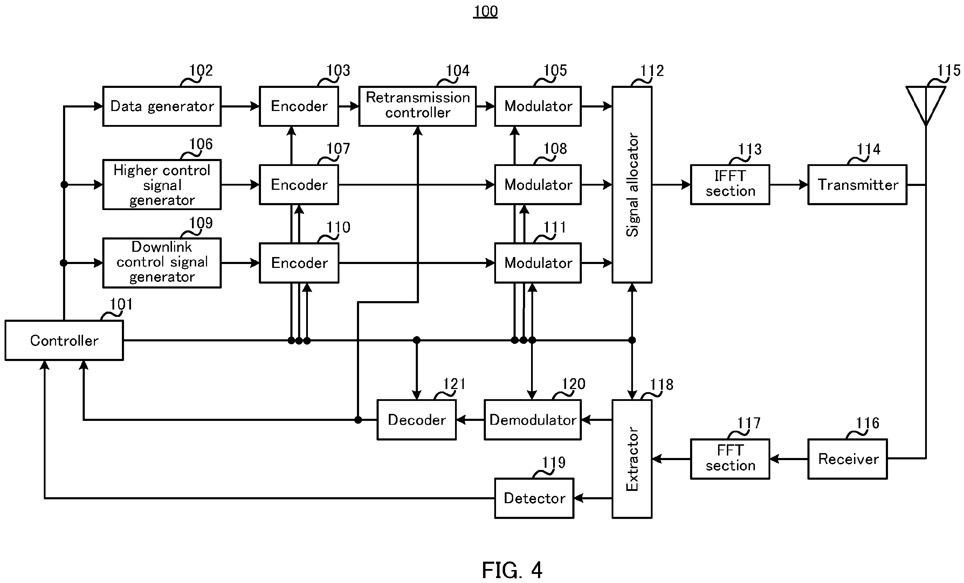

FIG. 4 is a block diagram illustrating a configuration example of base station 100 according to Embodiment 1 of the present disclosure. In FIG. 4, base station 100 includes controller 101, data generator 102, encoder 103, retransmission controller 104, modulator 105, higher control signal generator 106, encoder 107, modulator 108, downlink control signal generator 109, encoder 110, modulator 111, signal allocator 112, Inverse Fast Fourier Transform (IFFT) section 113 transmitter 114, antenna 115, receiver 116, Fast Fourier Transform (FFT) section 117, extractor 118, detector 119, demodulator 120, and decoder 121.

Controller 101 determines information for transmission of Message A by terminal 200 (also referred to as "transmission parameter of Message A"), and outputs the determined information to extractor 118, demodulator 120, and decoder 121. Further, controller 101 outputs the determined information to higher control signal generator 106. The information for transmission of Message A may include, for example, information on PRACH preamble resources, PUSCH resources, a PUSCH Transport Block Size (TBS), or MCS of Message A.

In addition, controller 101 determines radio resource allocation (e.g., downlink resources, MCS, and the like) for a downlink signal for transmitting a data signal (e.g., Message B or the like), a higher layer control signal (e.g., higher control signal), or downlink control information (e.g., downlink control signal). Controller 101 outputs the determined information (e.g., including scheduling information) to encoders 103, 107, and 110, modulators 105, 108, and 111, and signal allocator 112. Further, controller 101 outputs the determined information to downlink control signal generator 109.

In addition, based on a decoding result of Message A (e.g., C-Plane data or User Plane (UP) data) inputted from decoder 121 and a detection result of Message A (e.g., PRACH preamble) inputted from detector 119, controller 101 determines information to be included in Message B, and outputs the determined information to data generator 102.

In addition, controller 101 determines information on a PUCCH resource used by terminal 200 to transmit an ACK/NACK signal for Message B. Controller 101 outputs the determined information to higher control signal generator 106, downlink control signal generator 109, data generator 102, or extractor 118.

Data generator 102 generates an information bit sequence (in other words, downlink data) of Message B using the information to be included in Message B inputted from controller 101, and outputs the generated information bit sequence to encoder 103.

Encoder 103 performs error coding on the information bit sequence (data signal) inputted from data generator 102, and outputs the encoded data signal to retransmission controller 104.

Retransmission controller 104 outputs the encoded data signal inputted from encoder 103 to modulator 105 at the time of initial transmission. In addition, retransmission controller 104 holds the encoded data signal. Further, when a NACK for the transmitted data signal is inputted from decoder 121, retransmission controller 104 outputs the corresponding held data to modulator 105. When an ACK for the transmitted data is inputted, retransmission controller 104 deletes the corresponding held data.

Modulator 105 modulates the data signal inputted from retransmission controller 104, and outputs the modulated data signal to signal allocator 112.

Higher control signal generator 106 generates a control information bit sequence (higher control signal) using the control information inputted from controller 101, and outputs the generated control information bit sequence (higher control signal) to encoder 107.

Encoder 107 performs error correction coding on the control information bit sequence inputted from higher control signal generator 106, and outputs the encoded control signal to modulator 108.

Modulator 108 modulates the control signal inputted from encoder 107, and outputs the modulated control signal to signal allocator 112.

Downlink control signal generator 109 generates a control information bit sequence (downlink control signal; for example, Downlink Control Information (DCI)) using the control information inputted from controller 101, and outputs the generated control information bit sequence to encoder 110. Accordingly, downlink control signal generator 109 may scramble the control information (e.g., Physical Downlink Control Channel (PDCCH)) for the terminals using identification information (e.g., Random Access-RNTI (RA-RNTI)) for all terminals, UE-specific identification information (e.g., C-RNTI), or the like.

Encoder 110 performs error correction coding on the control information bit sequence inputted from downlink control signal generator 109, and outputs the encoded control signal to modulator 111.

Modulator 111 modulates the control signal inputted from encoder 110, and outputs the modulated control signal to signal allocator 112.

Based on the information indicating the radio resources inputted from controller 101, signal allocator 112 maps, to the radio resources, the data signal inputted from modulator 105, the higher control signal inputted from modulator 108, or the downlink control signal inputted from modulator 111. Signal allocator 112 outputs, to IFFT section 113, the downlink signal to which the signal is mapped.

IFFT section 113 performs transmission waveform generation processing such as Orthogonal Frequency Division Multiplexing (OFDM) on the signal inputted from signal allocator 112. In the case of OFDM transmission with Cyclic Prefix (CP) addition, IFFT section 113 adds CP (not illustrated). IFFT section 113 outputs the generated transmission waveform to transmitter 114.

Transmitter 114 performs Radio Frequency (RF) processing such as Digital-to-Analog (D/A) conversion, up-conversion, and the like on the signal inputted from IFFT section 113, and transmits a radio signal to terminal 200 via antenna 115.

Receiver 116 performs RF processing such as down-conversion or Analog-to-Digital (A/D) conversion on an uplink signal waveform received via antenna 115 from terminal 200, and outputs the uplink signal waveform after the reception processing to FFT section 117.

FFT section 117 performs, on the uplink signal waveform inputted from receiver 116, FFT processing for converting a time-domain signal into a frequency-domain signal. FFT section 117 outputs the frequency-domain signal obtained by the FFT processing to extractor 118.

Based on the information inputted from controller 101, extractor 118 extracts, from the signal inputted from FFT section 117, a radio resource portion by which the PRACH preamble is transmitted, or a radio resource portion by which a PUSCH of Message A is transmitted. Extractor 118 outputs, to detector 119, the extracted radio resource portion by which the PRACH preamble is transmitted, and outputs, to demodulator 120, the extracted radio resource portion by which another signal different from the PRACH preamble (e.g., the PUSCH of Message A) is transmitted. Further, based on the information inputted from controller 101, extractor 118 extracts the ACK/NACK signal for Message B from the signal inputted from FFT section 117, and outputs the ACK/NACK signal to demodulator 120.

Detector 119 performs PRACH preamble detection on the radio resource portion inputted from extractor 118 that corresponds to the PRACH preamble. Detector 119 outputs information on the detection result of detection of the PRACH preamble to controller 101.

Based on the information inputted from controller 101, demodulator 120 demodulates the data of Message A or the ACK/NACK signal for Message B inputted from extractor 118, and outputs the demodulation result (demodulation sequence) to decoder 121.

Based on the information inputted from controller 101, decoder 121 performs error correction decoding on the demodulation result inputted from demodulator 120, and outputs the decoded bit sequence (including, for example, UCI, C-Plane data, or UP data). For example, decoder 121 also outputs the decoding result of Message A to controller 101.

In addition, decoder 121 decodes the ACK/NACK signal for Message B based on the demodulation result inputted from demodulator 120, and judges whether the ACK/NACK signal for the transmitted data signal indicates either ACK or NACK. Decoder 121 outputs the judgement result (ACK or NACK) to retransmission controller 104.

[Configuration of Terminal]

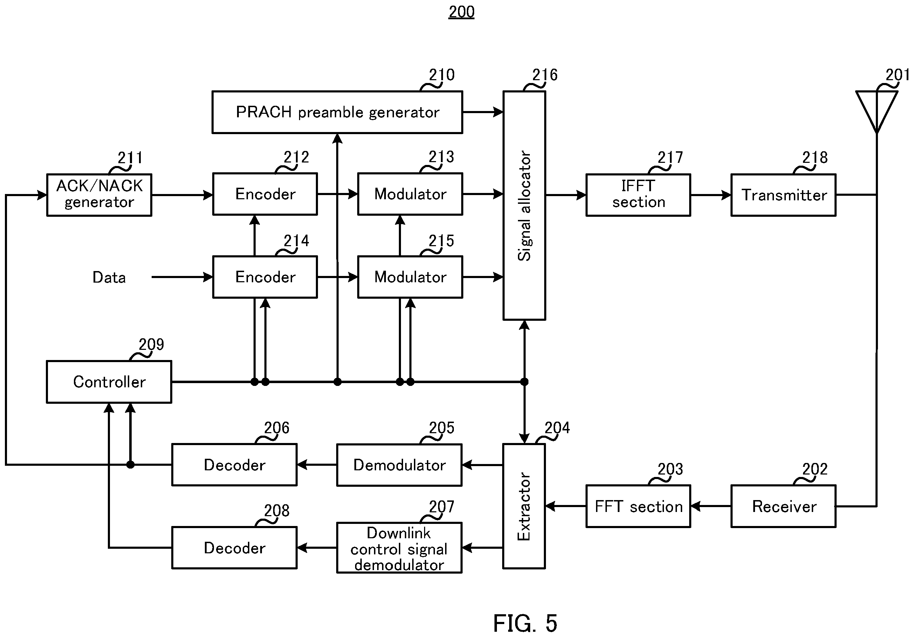

FIG. 5 is a block diagram illustrating a configuration example of terminal 200 according to the embodiment of the present disclosure. In FIG. 5, terminal 200 includes antenna 201, receiver 202, FFT section 203, extractor 204, demodulator 205, decoder 206, downlink control signal demodulator 207, decoder 208, controller 209, PRACH preamble generator 210, ACK/NACK generator 211, encoder 212, modulator 213, encoder 214, modulator 215, signal allocator 216, IFFT section 217, and transmitter 218.

Receiver 202 performs RF processing such as down-conversion, Analog-to-Digital (A/D) conversion, or the like on the signal waveform of the downlink signal from base station 100 received via antenna 201, and outputs the received signal obtained (baseband signal) to FFT section 203. The downlink signal includes, for example, a data signal (e.g., Message B or the like), a higher control signal, or a downlink control signal.

FFT section 203 performs, on the signal (time-domain signal) inputted from receiver 202, FFT processing for converting the time-domain signal into a frequency-domain signal. FFT section 203 outputs the frequency domain signal obtained by the FFT processing to extractor 204.

Based on the control information inputted from controller 209 (e.g., information on radio resources for the control signal), extractor 204 extracts the data signal (e.g., Message B or the like), the downlink control signal, or the higher control signal from the signal inputted from FFT section 203. Extractor 204 outputs the data signal or the higher control signal to demodulator 205, and outputs the downlink control signal to downlink control signal demodulator 207.

Demodulator 205 demodulates the data signal or the higher control signal inputted from extractor 204, and outputs the demodulation result to decoder 206.

Decoder 206 performs error correction decoding using the demodulation result inputted from demodulator 205 to obtain received data (e.g., Message B) or control information. Decoder 208 outputs the obtained received data or control information to controller 209. In addition, decoder 206 performs error detection on the received data, and outputs an error detection result (e.g., the presence or absence of an error) to ACK/NACK generator 211.

Downlink control signal demodulator 207 demodulates the downlink control signal inputted from extractor 204, and outputs the demodulation result to decoder 208.

Decoder 208 performs error correction decoding using the demodulation result inputted from downlink control signal demodulator 207 to obtain the control information. Decoder 208 outputs the control information obtained to controller 209.

Controller 209 determines a parameter relevant to uplink transmission (e.g., transmission of Message A) based on the control information inputted from decoder 206 or decoder 208. Controller 209 outputs the determined information to PRACH preamble generator 210, encoders 212 and 214, modulators 213 and 215, and signal allocator 216.

In addition, controller 209 determines information on transmission of an ACK/NACK signal (e.g., an uplink resource, transmission method, parameter, or the like) based on the information on the resource for transmission of the ACK/NACK signal for Message B that is inputted from decoder 206 or decoder 208. Controller 209 outputs the determined information to encoder 212, modulator 213, and signal allocator 216.

Controller 209 also outputs, to extractor 204, the information on the radio resources for the control signal that is included in the control information inputted from decoder 206 or decoder 208.

PRACH preamble generator 210 generates the PRACH preamble based on the control information (e.g., transmission parameter of Message A) inputted from controller 209, and outputs the generated PRACH preamble to signal allocator 216.

Based on the error detection result inputted from decoder 206, ACK/NACK generator 211 generates an ACK/NACK signal for the received downlink data (e.g., Message B) and outputs the ACK/NACK signal (e.g., ACK/NACK signal sequence) to encoder 212.

Based on the information inputted from controller 209 (e.g., information on transmission of ACK/NACK signal), encoder 212 performs error correction coding on the ACK/NACK signal sequence inputted from ACK/NACK generator 211 and outputs the encoded ACK/NACK signal sequence to modulator 213.

Based on the information inputted from controller 209, modulator 213 modulates the ACK/NACK signal sequence inputted from encoder 212, and outputs the modulated ACK/NACK signal sequence (modulation symbol sequence) to signal allocator 216.

Based on the control information (e.g., transmission parameter of Message A) inputted from controller 209, encoder 214 performs error correction coding on, for example, an information bit sequence (e.g., C-Plane data and UP data) to be transmitted in the data part of Message A, and outputs the encoded bit sequence to modulator 215.

Based on the information inputted from controller 209, modulator 215 modulates the bit sequence inputted from encoder 214, and outputs a data signal (modulation symbol sequence) to signal allocator 216.

Signal allocator 216 maps, to radio resources indicated by controller 209, the signal inputted from PRACH preamble generator 210, the signal inputted from modulator 213, or the signal inputted from modulator 215, and outputs, to IFFT section 217, the uplink signal in which the signal is mapped.

IFFT section 217 performs transmission waveform generation processing such as OFDM on the signal inputted from signal allocator 216. In the case of OFDM transmission with CP addition, IFFT section 217 adds CP (not illustrated). Alternatively, when IFFT section 217 generates a single-carrier waveform, a Discrete Fourier Transform (DFT) section (not illustrated) may be added on the upstream side of signal allocator 216. IFFT section 217 outputs the generated transmission waveform to transmitter 218.

Transmitter 218 performs the RF processing such as D/A conversion, up-conversion, and/or the like on the signal inputted from IFFT section 217, and transmits a radio signal to base station 100 via antenna 201.

[Operation Example of Base Station 100 and Terminal 200]

An operation example of base station 100 and terminal 200 having the above configurations will be described.

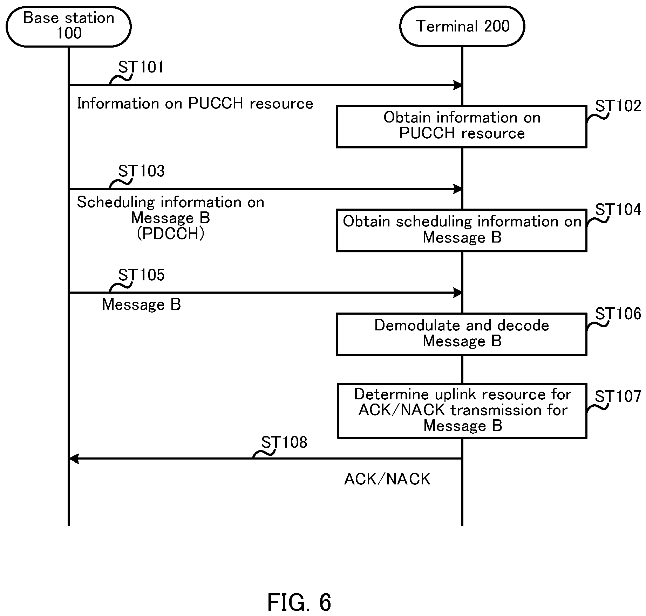

FIG. 6 illustrates an exemplary flow relating to transmission and reception processing for transmitting and receiving the ACK/NACK signal for Message B between base station 100 and terminal 200 according to the present embodiment.

In FIG. 6, base station 100 indicates terminal 200 of information on an uplink resource (e.g., a PUCCH resource), for example (ST101). The information on the PUCCH resource includes, for example, information on a PUCCH resource for transmitting an ACK/NACK signal for Message B. Terminal 200 obtains the information on the PUCCH resource (ST102).

Base station 100 transmits, to terminal 200, scheduling information including, for example, allocation information for Message B (ST103). The scheduling information for Message B may be transmitted by a PDCCH, for example. Terminal 200 obtains the scheduling information for Message B (ST104).

Base station 100 transmits Message B to terminal 200 based on, for example, the scheduling information for Message B (ST105).

Upon receiving Message B, terminal 200 demodulates and decodes Message B (ST106). Further, terminal 200 generates an ACK/NACK signal for Message B.

Based on at least one of, for example, the information on the PUCCH resource, the scheduling information (e.g., PDCCH), and Message B (e.g., RAR), terminal 200 determines an uplink resource for transmitting the ACK/NACK signal for Message B (e.g., an RRC signal) (ST107).

Then, terminal 200 transmits the ACK/NACK signal for Message B to base station 100 based on the determined uplink resource (ST108).

[Transmission Method for ACK/NACK Signal for Message B]

Next, an example of the transmission method of transmitting the ACK/NACK signal for Message B will be described.

In the present embodiment, terminal 200 transmits the ACK/NACK signal for Message B in a PUCCH, for example.

At this time, terminal 200 determines the PUCCH resource for transmitting the ACK/NACK signal for Message B, for example, based on an indication (e.g., a parameter given by Equation 1) of a PUCCH resource for transmitting an ACK/NACK signal for Message 4 in the 4-step Random access procedure, and additionally, based on new parameter "X." Parameter X may be, for example, a value configured for each of a plurality of terminals 200 to which the transmission of Message B is addressed.

To begin with, operation example 1 and operation example 2 in the 2-step RACH procedure in the present embodiment will be described below.

Here, by way of example, a case in which three terminals 200 (e.g., UE #A, UE #B, and UE #C) transmit Message A to base station 100 (e.g., gNB) will be described.

[Operation Example 1]

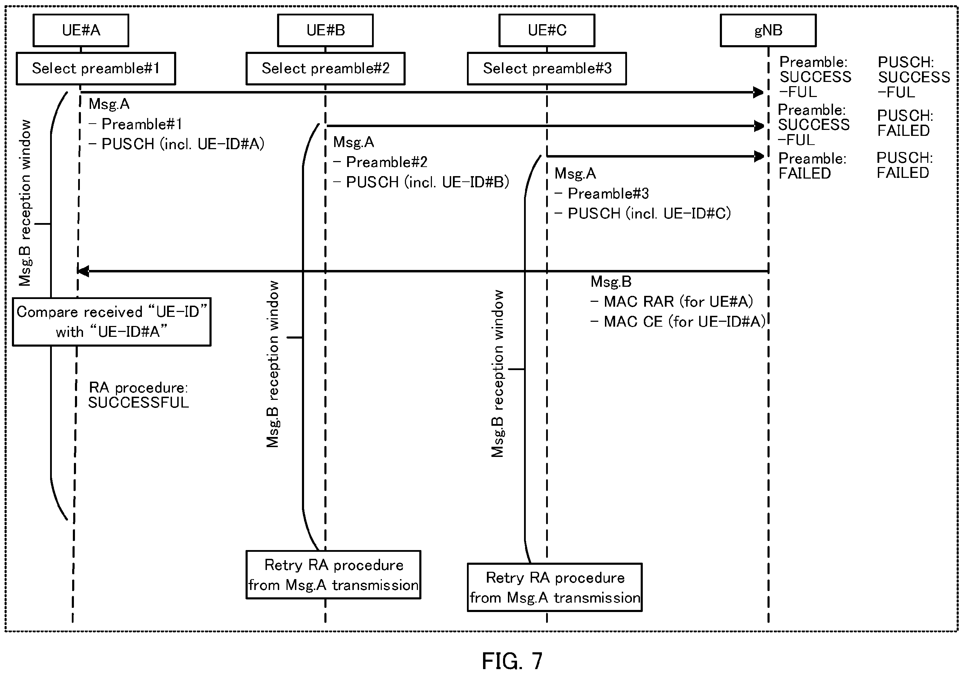

FIG. 7 illustrates an exemplary 2-step Random access procedure in operation example 1.

<Transmission of Message A>

Each of terminals 200 transmits Message A to base station 100.

Message A includes, for example, a RACH preamble (e.g., one of Preambles #1 to #3) and a PUSCH (e.g., a data part or UCI + data part). Further, the PUSCH includes, for example, an UE-ID for identifying terminal 200 (e.g., one of UE-ID #A, UE-ID #B, and UE-ID #C).

Further, at the transmission timing of the RACH preamble (in other words, Message A), each terminal 200 operates a "Msg. B reception window" (in other words, a timer) that is a period in which Message B can be received.

<Transmission of Message B>

When detecting Message A transmitted by each of terminals 200 and successfully decoding Message A correctly, base station 100 transmits Message B. Message B includes, for example, a message (e.g., MAC RAR and MAC CE) including an RAR and a UE-ID for identifying terminal 200.

Meanwhile, when failing to detect Message A (e.g., PRACH preamble) or failing to correctly decode Message A (e.g., PUSCH), base station 100 does not include, in Message B, information addressed to terminal 200 having transmitted corresponding Message A.

For example, in the example illustrated in FIG. 7, base station 100 (gNB) detects Preamble #1 of Message A transmitted by UE #A (detection result: SUCCESSFUL), and correctly decodes the PUSCH (decoding result: SUCCESSFUL). Meanwhile, base station 100 (gNB) detects Preamble #2 of Message A transmitted by UE #B (detection result: SUCCESSFUL), but fails to decode the PUSCH correctly (decoding result: FAILED). In addition, base station 100 (gNB) fails to detect Preamble #1 of Message A transmitted by UE #C (detection result: FAILED), failing to decode the PUSCH correctly (decoding result: FAILED).

Thus, in the example illustrated in FIG. 7, base station 100 generates Message B including the RAR for UE #A and UE-ID #A of UE #A. In other words, in FIG. 7, Message B does not include information addressed to UE #B and UE #C.

<Reception of Message B>

When not receiving Message B including information addressed to terminal 200 having transmitted Message A, terminal 200 having transmitted Message A retransmits Message A within the period of the Msg. B reception window (in other words, begins the Random access process again with the transmission of Message A). In the example illustrated in FIG. 7, UE #B and UE #C do not receive Message B addressed to UE #B and UE #C within the period of the Msg. B reception window, and accordingly, retransmit Message A.

On the other hand, when terminal 200 having transmitted Message A receives Message B including the information addressed to corresponding terminal 200 within the period of the Msg. B reception window and when the UE-ID included in Message B matches the UE-ID included in transmitted Message A, the terminal determines that the RACH procedure is successful. In the example illustrated in FIG. 7, UE #A receives Message B addressed to UE #A within the period of the Msg. B reception window, and the UE-ID (UE-ID #A) included in Message B matches the UE-ID (UE-ID #A) included in transmitted Message A. Accordingly, UE #A determines that the RACH procedure is successful (RA procedure: SUCCESSFUL).

<Operation Example 2>

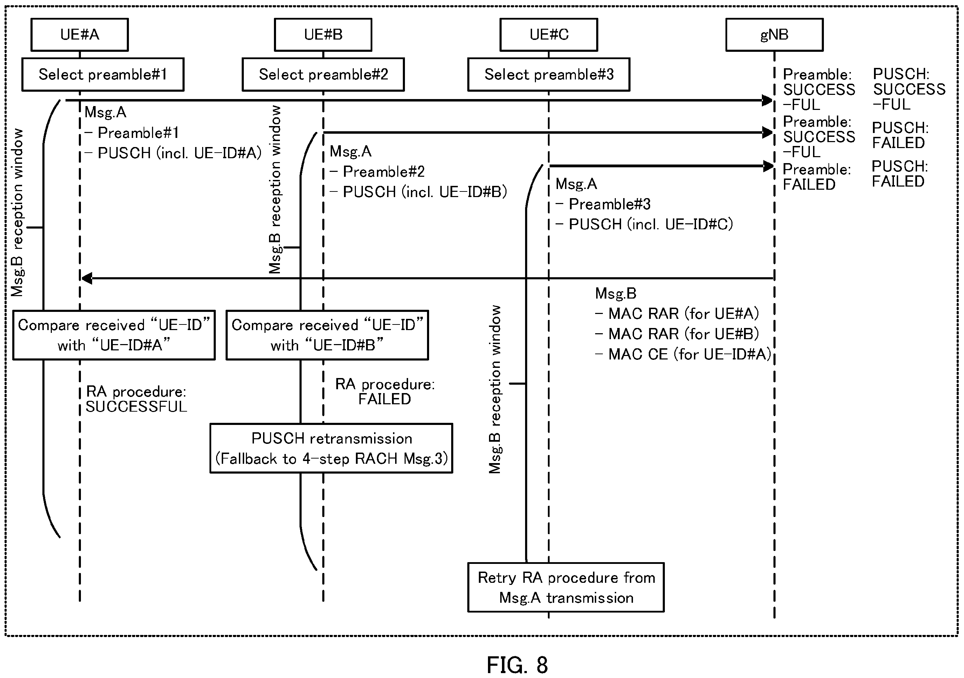

FIG. 8 illustrates an exemplary 2-step RACH procedure in operation example 2.

<Transmission of Message A>

Each of terminals 200 transmits Message A to base station 100.

Like operation example 1, Message A includes, for example, a RACH preamble (e.g., any of Preambles #1 to #3) and a PUSCH (e.g., a data part or UCI + data part). Further, the PUSCH includes, for example, an UE-ID for identifying terminal 200 (e.g., any of UE-ID #A, UE-ID #B, and UE-ID #C).

Further, at the transmission timing of the RACH preamble (in other words, Message A), each terminal 200 operates a "Msg. B reception window" (in other words, a timer) that is a period in which Message B can be received.

<Transmission of Message B>

When detecting Message A transmitted by each of terminals 200 and successfully decoding Message A correctly, base station 100 transmits Message B. Message B includes, for example, a message (e.g., MAC RAR and MAC CE) including an RAR and a UE-ID for identifying terminal 200.

Base station 100 transmits Message B also when detecting the RACH preamble of Message A transmitted by each of terminals 200 but failing to correctly decode the data part. When base station 100 detects the RACH preamble but fails to correctly decode the data part, base station 100 cannot identify terminal 200 having transmitted the RACH preamble at this point. Thus, in this case, for example, Message B includes the RAR (in other words, no UE-ID is included). For example, with respect to terminal 200 having transmitted the corresponding RACH preamble, the RAR may include information on a retransmission request for the data part and information on resources used in the uplink.

On the other hand, when failing to detect Message A (e.g., PRACH preamble), base station 100 does not include, in Message B, information addressed to terminal 200 having transmitted corresponding Message A.

For example, in the example illustrated in FIG. 8 as in operation example 1 (e.g., FIG. 7), base station 100 (gNB) detects Preamble #1 of Message A transmitted by UE #A (detection result: SUCCESSFUL), and correctly decodes the PUSCH (decoding result: SUCCESSFUL). Meanwhile, base station 100 (gNB) detects Preamble #2 of Message A transmitted by UE #B (detection result: SUCCESSFUL), but fails to decode the PUSCH correctly (decoding result: FAILED). In addition, base station 100 (gNB) fails to detect Preamble #1 of Message A transmitted by UE #C (detection result: FAILED), failing to decode the PUSCH correctly (decoding result: FAILED).

Thus, in the example illustrated in FIG. 8, base station 100 generates Message B including the RAR for UE #A, UE-ID #A of UE #A, and the RAR for UE #B. In other words, in FIG. 7, Message B does not include information addressed to UE #C.

<Reception of Message B>

When not receiving Message B including information addressed to terminal 200 having transmitted Message A, terminal 200 having transmitted Message A retransmits Message A within the period of the Msg. B reception window (in other words, begins the Random access process again with the transmission of Message A). In the example illustrated in FIG. 8, UE #C does not receive Message B addressed to UE #C within the period of the Msg. B reception window, and accordingly, retransmits Message A.

On the other hand, when terminal 200 having transmitted Message A receives Message B including the information addressed to corresponding terminal 200 within the period of the Msg. B reception window but the UE-ID included in Message B does not match the UE-ID included in transmitted Message A, the terminal performs uplink transmission in accordance with information included in the RAR corresponding to Message A (e.g., PRACH preamble). In the example illustrated in FIG. 8, UE #B receives Message B (e.g., RAR) addressed to UE #B within the period of the Msg. B reception window, but the UE-ID (UE-ID #A) included in Message B does not match the UE-ID (UE-ID #B) included in transmitted Message A. Accordingly, UE #B determines that the RACH procedure has not yet been successful (RA procedure: FAILED). UE #B may retransmit the PUSCH based on, for example, the information included in the RAR for UE #B in Message B. In other words, UE #B may fall back to transmission of Message 3 of the 4-step Random access procedure.

In addition, when terminal 200 having transmitted Message A receives Message B including the information addressed to corresponding terminal 200 within the period of the Msg. B reception window and when the UE-ID included in Message B matches the UE-ID included in transmitted Message A, the terminal determines that the RACH procedure is successful. In the example illustrated in FIG. 8, UE #A receives Message B addressed to UE #A within the period of the Msg. B reception window, and the UE-ID (UE-ID #A) included in Message B matches the UE-ID (UE-ID #A) included in transmitted Message A. Accordingly, UE #A determines that the RACH procedure is successful (RA procedure: SUCCESSFUL).

Operation examples 1 and 2 of the 2-step Random access procedure have been described above.

As described above, when base station 100 detects and correctly decodes Message A, Message B includes the MAC PDU including the RAR and the MAC PDU including the message (e.g., Contention resolution MAC CE) including the UE-ID for identifying terminal 200.

Further, the MAC PDU including the RAR may, for example, include information on the transmission timing of an uplink signal for terminal 200, Temporary C-RNTI (TC-RNTI), or information on resources used by terminal 200 in the uplink.

In addition to the MAC PDU including the RAR and the MAC PDU including the UE-ID, Message B may, for example include a MAC PDU including an RRC signal for RRC connection, RRC resumption, and RRC reconnection.

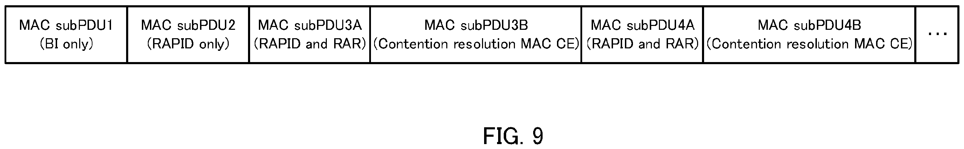

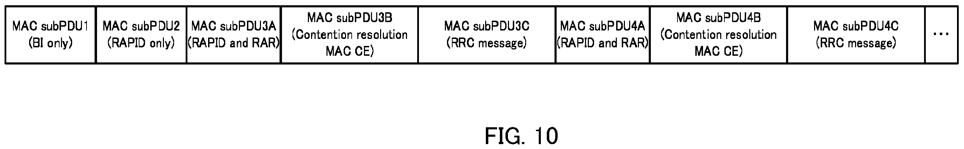

FIGS. 9 and 10 illustrate examples of the configuration of Message B. FIG. 9 illustrates an example in which the MAC PDU including an RRC signal is not included in Message B, and FIG. 10 illustrates an example in which the MAC PDU including an RRC signal is included in Message B.

For example, when terminal 200 receives Message B including the information addressed to terminal 200, when the UE-ID included in Message B matches the UE-ID included in transmitted Message A, and when Message B includes the MAC PDU including the RRC signal addressed to terminal 200, terminal 200 decodes the MAC PDU including the RRC signal, and transmits the ACK/NACK signal corresponding to the decoding result (or the error detection result) to base station 100 in the uplink resource (e.g., PUCCH resource).

A determination method for determining PUCCH resources for transmission of an ACK/NACK signal will be described below.

For example, using a cell-specific higher layer signalling (e.g., RMSI) such as a SIB, base station 100 indicates terminal 200, in advance, of a resource configuration (e.g., PUCCH resource set) indicating a combination of a plurality of parameters relevant to PUCCH resources. For example, in Release 15 NR, the PUCCH resource set includes 16 combinations of parameters relevant to PUCCH resources. Note that the number of combinations of the parameters relevant to the PUCCH resources included in the PUCCH resource set is not limited to 16, and may be any other number.

Further, base station 100 selects, from the PUCCH resource set, one combination of the parameters relevant to the PUCCH resources actually used by terminal 200, based on some bits within the PDCCH for which Message B is scheduled (e.g., 3 bits in Release 15 NR), based on a CCE number of the PDCCH, and based on additional indication information "X."

For example, combination $r_{PUCCH}$ (e.g., 16 combinations of 0th to 15th combinations) of the parameters relevant to the PUCCH resources is given by following Equation:

$$r_{PUCCH} = \text{ceiling}(2n_{CCE}/N_{CCE}) + 2\Delta_{PRI} + X \qquad \text{... (Equation 2)}.$$

In Equation 2, $n_{CCE}$ represents the CCE number, $N_{CCE}$ represents the number of CCEs, and $\Delta_{PRI}$ represents a value (e.g., any of 0 to 7) that is explicitly indicated by 3 bits of the PDCCH. Note that $\Delta_{PRI}$ is not limited to 3 bits of the PDCCH, and may be another number of bits.

As described above, terminal 200 determines uplink resources to be used for transmission of an ACK/NACK signal based on, for example, the value relevant to Message B indicated by the PDCCH (e.g., $\Delta_{PRI}$), the resource to which the PDCCH is allocated (e.g., $n_{CCE}$), and parameter "X" configured for each terminal 200. In other words, terminal 200 determines the PUCCH resources for transmission of the ACK/NACK signal for Message B based on the method (e.g., see Equation 2) different from the method (e.g., see Equation 1) for determining the PUCCH resources for transmission of the ACK/NACK signal for Message 4 of the 4-step Random access procedure, for example.

In Equation 2, parameter "X" may be indicated by base station 100 to terminal 200 explicitly or implicitly by, for example, the following methods (any of or a combination of Options 1 to 5).

<Option 1>

Parameter "X" may be included in the MAC RAR of Message B (in other words, in information on a response to Message A (PRACH preamble)).

The MAC PDU including the RAR may include, in addition to parameter "X," information on an uplink transmission timing for terminal 200, TC-RNTI, or information on resources used by terminal 200 in the uplink.

<Option 2>

Parameter "X" may be associated with the UE-ID included in Message A transmitted by terminal 200.

For example, the association may be such that X = UE-ID mod Y. Here, Y is the number of combinations of a plurality of parameters relevant to the PUCCH resources included in the PUCCH resource set, and Y = 16 in Release 15 NR.

<Option 3>

Parameter "X" may be a value associated with the arrangement order (e.g., referred to as "RAR order") of RARs corresponding respectively to a plurality of terminals 200 in Message B.

For example, Message B illustrated in FIG. 10 includes the RARs in the order of MAC subPDU3A, MAC subPDU4A, [...]. In addition, in Message B illustrated in FIG. 10, an RRC signal addressed to terminal 200 corresponding to MAC subPDU3Ais included in MAC subPDU3C, and an RRC signal addressed to terminal 200 corresponding to MAC subPDU4A is included in MAC subPDU4C.

In this case, for example, based on the order in which the RARs are included in Message B (arrangement order), X = 0 may be configured for terminal 200 corresponding to MAC subPDU3C (e.g., the first RAR), X = 1 may be configured for terminal 200 corresponding to MAC subPDU4C (e.g., the second RAR). Note that, the number of RARs included in Message B and the values of X associated with the arrangement order of the RARs are not limited to the above values.

<Option 4>

Parameter "X" may be a value associated with a RACH preamble number (e.g., PAID) used in Message A transmitted by terminal 200.

For example, the association may be such that X = PAID mod Y. Here, Y is the number of combinations of a plurality of parameters relevant to the PUCCH resources included in the PUCCH resource set, and Y = 16 in Release 15 NR.

<Option 5>

Parameter "X" may be a value associated with a port number (e.g., DMRS port number) of a reference signal (e.g., Demodulation Reference Signal (DMRS)) of the PUSCH used in Message A transmitted by terminal 200.

For example, the association may be such that X = DMRS port index mod Y. Here, Y is the number of combinations of a plurality of parameters relevant to the PUCCH resources included in the PUCCH resource set, and Y = 16 in Release 15 NR

The indication methods (Options 1 to 5) for indication of parameter "X" have been described above.

According to five Options described above, parameter "X" is indicated to terminal 200 without an increase in the overhead of the PDCCH.

Further, for example, according to Equation 2 including parameter "X," each terminal 200 can select combination $r_{PUCCH}$ of the parameters relevant to PUCCH resources for each terminal 200. In other words, terminal 200 can individually determine, based on parameter "X" configured for each terminal 200, the PUCCH resources for transmission of the ACK/NACK signal for Message B (in other words, the signal addressed to a plurality of terminals 200) transmitted by group-cast transmission. It is thus possible to reduce collision of PUCCH resources between terminals 200 in transmission of ACK/NACK signals for Message B (e.g., RRC signal).

Therefore, according to the present embodiment, even when Message B (e.g., including RRC signals) is transmitted by group-cast transmission, it is possible to reduce collision of PUCCH resources between terminals 200 in transmission of ACK/NACK signals for the RRC signals without an increase in the overhead of the PDCCH. Thus, in the present embodiment, it is possible to improve the efficiency in the random access processing (e.g., retransmission control) for Message B in the 2-step Random access procedure.

Note that, any one of above-mentioned Options 1 to 5 may be applied, or a combination of a plurality of Options may be applied.

Further, the present embodiment is not limited to the case where terminal 200 determines the PUCCH using some bits of the PDCCH for which Message B is scheduled (e.g., 3 bits in Release 15 NR), the CCE number that is the PDCCH resource allocation information, and additionally, parameter "X." For example, terminal 200 may determine the PUCCH resources using parameter "X" without using some bits of the PDCCH for which Message B is scheduled and the CCE number. In this instance, it is possible to further reduce the overhead of the PDCCH.

Further, when a plurality of group-cast and unicast transmission methods are supported for Message B, terminal 200 may determine PUCCH resources depending on the transmission method for Message B. For example, terminal 200 determines PUCCH resources using parameter "X" when group-cast transmission is configured for Message B (see, e.g., Equation 2), whereas terminal 200 may determine PUCCH resources without using parameter "X" when unicast transmission is configured (see, e.g., Equation 1).

(Embodiment 2)

Since a base station and a terminal according to the present embodiment have the same basic configurations as base station 100 and terminal 200 according to Embodiment 1, they will be described with reference to FIGS. 4 and 5.

In the present embodiment, terminal 200 transmits an ACK/NACK signal for Message B in an uplink control channel (e.g., PUCCH).

At this time, base station 100 indicated terminal 200 of PUCCH resources for transmission of the ACK/NACK signal using, for example, uplink allocation information (e.g., referred to as "UL grant") included in an RAR of Message B. Terminal 200 determines the PUCCH resources for transmission of the ACK/NACK signal for Message B (e.g., an RRC signal) based on, for example, the UL grant included in the RAR of Message B addressed to terminal 200.

For example, in operation example 2 of the 2-step Random access procedure in Embodiment 1 (see, e.g., FIG. 8), base station 100 transmits Message B when detecting and correctly decoding Message A. At this time, Message B includes a message including an RAR and a UE-ID for identifying terminal 200.

In the present embodiment, when detecting and correctly decoding Message A, base station 100 indicates, in the UL grant included in the RAR, the uplink resources (e.g., PUCCH resources) for transmission of the ACK/NACK signal for Message B (e.g., RRC signal). For example, when terminal 200 receives Message B including the information addressed to terminal 200, when the UE-ID included in Message B matches the UE-ID transmitted in Message A, and when Message B includes a MAC PDU including the RRC signal addressed to terminal 200, terminal 200 decodes the MAC PDU, and transmits the decoding result (e.g., the ACK/NACK signal) to base station 100 in the PUCCH resources indicated by the UL grant.

For example, in the example illustrated in FIG. 8, base station 100 (gNB) detects Preamble #1 of Message A transmitted by UE #A (detection result: SUCCESSFUL), and correctly decodes the PUSCH (decoding result: SUCCESSFUL). Thus, base station 100 configures, in the UL grant included in the RAR for UE #A in Message B, the PUCCH resources for transmission of the ACK/NACK signal for Message B. UE #A transmits the ACK/NACK signal for Message B based on the PUCCH resources indicated in the UL grant included in the RAR for UE #A included in Message B.

Further, in operation example 2 of the 2-step Random access procedure according to Embodiment 1 (see, e.g., FIG. 8), base station 100 transmits Message B also when detecting the RACH preamble of Message A but failing to correctly decode the data part. At this time, Message B includes the RAR For example, with respect to terminal 200 having transmitted the corresponding RACH preamble, the RAR may include information on a retransmission request for the data part and information (UL grant) on resources used by terminal 200 in the uplink.

In the present embodiment, for example, when detecting the RACH preamble of Message A (in FIG. 8, Message A of UE #B) but failing to correctly decode the data part, base station 100 indicates, in the UL grant included in the RAR, the uplink resources (e.g., PUSCH resources) for retransmission of the data part (e.g., PUSCH) in Message A. Terminal 200 (in FIG. 8, UE #B) retransmits the data part (e.g., PUSCH) of Message Abased on the PUSCH resources indicated in the UL grant included in the RAR for terminal 200 in Message B.

Note that, the RAR may include a flag for identifying whether the UL grant indicates uplink resources for retransmission of Message A (e.g., PUSCH) or PUCCH resources for transmission of an ACK/NACK signal for Message B.

In Release 15 NR, for example, the UL grant included in the RAR has a 27-bit field. In the present embodiment, for example, a part of the 27-bit field included in the UL grant may be used for indication of the PUCCH resources for transmission of the ACK/NACK signal for Message B. The size of the field included in the UL grant is not limited to 27 bits.

In addition, for example, when the number of combinations of a plurality of parameters relevant to the PUCCH resources included in the PUCCH resource set is 16 as in Release 15 NR, 4 bits may be used for indication of the PUCCH resources for transmission of the ACK/NACK signal for Message B. The remaining field may be used for other applications or may be Reserved. Note that the number of bits used for indication of the PUCCH resources is not limited to 4 bits.

According to the present embodiment, base station 100 indicates the PUCCH resources for transmission of the ACK/NACK signal for Message B by the UL grant included in the RAR in Message B. In other words, base station 100 can configure (in other words, schedule) PUCCH resources for each terminal 200 in the UL grant included in the RAR for each terminal 200 in Message B.

Thus, terminal 200 can individually determine, based on the UL grant configured for each terminal 200, the PUCCH resources for transmission of the ACK/NACK signal for Message B transmitted by group-cast transmission (in other words, the signal addressed to a plurality of terminals 200). It is thus possible to reduce collision of PUCCH resources between terminals 200 in transmission of ACK/NACK signals for Message B (e.g., RRC signal).

Moreover, since base station 100 does not need to indicate PUCCH resources by a PDCCH (in other words, DCI), the overhead of the PDCCH can be reduced.

(Embodiment 3)

Since a base station and a terminal according to the present embodiment have the same basic configurations as base station 100 and terminal 200 according to Embodiment 1, they will be described with reference to FIGS. 4 and 5.

In the present embodiment, terminal 200 transmits an ACK/NACK signal for Message B in an uplink data channel (e.g., PUSCH).

At this time, base station 100 indicates terminal 200 of PUSCH resources for transmission of the ACK/NACK signal using, for example, a UL grant included in an RAR of Message B. Terminal 200 determines the PUSCH resources for transmission of the ACK/NACK signal for Message B (e.g., an RRC signal) based on, for example, the UL grant included in the RAR of Message B addressed to terminal 200.

For example, in operation example 2 of the 2-step Random access procedure in Embodiment 1 (see, e.g., FIG. 8), base station 100 transmits Message B when detecting and correctly decoding Message A. At this time, Message B includes a message including the RAR and a UE-ID for identifying terminal 200.

In the present embodiment, when detecting and correctly decoding Message A, base station 100 indicates, in the UL grant included in the RAR, the uplink resources (e.g., PUSCH resources) for transmission of the ACK/NACK signal for Message B (e.g., RRC signal). For example, when terminal 200 receives Message B including the information addressed to terminal 200, when the UE-ID included in Message B matches the UE-ID transmitted in Message A, and when Message B includes a MAC PDU including the RRC signal addressed to terminal 200, terminal 200 decodes the MAC PDU, and transmits the decoding result (e.g., the ACK/NACK signal) to base station 100 in the PUSCH resources indicated by the UL grant.

For example, in the example illustrated in FIG. 8, base station 100 (gNB) detects Preamble #1 of Message A transmitted by UE #A (detection result: SUCCESSFUL), and correctly decodes the PUSCH (decoding result: SUCCESSFUL). Thus, base station 100 configures, in the UL grant included in the RAR for UE #A in Message B, the PUSCH resources for transmission of the ACK/NACK signal for Message B. UE #A transmits the ACK/NACK signal for Message B based on the PUSCH resources indicated in the UL grant included in the RAR for UE #A included in Message B.

Further, in operation example 2 of the 2-step Random access procedure according to Embodiment 1 (see, e.g., FIG. 8), base station 100 transmits Message B also when detecting the RACH preamble of Message A but failing to correctly decode the data part. At this time, Message B includes the RAR For example, with respect to terminal 200 having transmitted the corresponding RACH preamble, the RAR may include information on a retransmission request for the data part and information (UL grant) on resources used by terminal 200 in the uplink.

In the present embodiment, for example, when detecting the RACH preamble of Message A (in FIG. 8, Message A of UE #B) but failing to correctly decode the data part, base station 100 indicates, in the UL grant included in the RAR, the uplink resources (e.g., PUSCH resources) for retransmission of the data part (e.g., PUSCH) in Message A. Terminal 200 (in FIG. 8, UE #B) retransmits the data part (e.g., PUSCH) of Message Abased on the PUSCH resources indicated in the UL grant included in the RAR addressed to terminal 200 in Message B.

Note that, in the present embodiment, for example, in FIG. 6, the processes of transmitting and obtaining the information on PUCCH resources for ACK/NACK transmission for Message B (e.g., the processes of ST101 and ST102) are not necessary.

In addition, for example, one of the following two methods may be applied as a mapping method for mapping the ACK/NACK signal to the PUSCH.

The first method is a method in which, as with a UL Shared Channel (UL-SCH), the ACK/NACK signal is mapped to the PUSCH in the same method as mapping of a data part. In this instance, the ACK/NACK signal is transmitted in accordance with an MCS indicated by a UL grant.

The second method is a method of mapping the ACK/NACK signal to the PUSCH by a method of multiplexing Uplink Control Information (UCI) onto the PUSCH (see, e.g., NPLs 2 and 3) when there is no UL-SCH in Release 15 NR, for example. In this instance, the ACK/NACK signal may be transmitted in accordance with an MCS lower than an MCS indicated by the UL grant.

According to the present embodiment, base station 100 indicates the PUSCH resources for transmission of the ACK/NACK signal for Message B by the UL grant included in the RAR in Message B. In other words, base station 100 can configure (in other words, schedule) PUSCH resources for each terminal 200 in the UL grant included in the RAR for each terminal 200 in Message B.

Thus, terminal 200 can individually determine, based on the UL grant configured for each terminal 200, the PUSCH resources for transmission of the ACK/NACK signal for Message B (in other words, the signal addressed to a plurality of terminals 200) transmitted by group-cast transmission. It is thus possible to reduce collision of PUSCH resources between terminals 200 in transmission of ACK/NACK signals for Message B (e.g., RRC signal).

Moreover, since base station 100 does not need to indicate PUSCH resources by a PDCCH (in other words, DCI), the overhead of the PDCCH can be reduced.

Further, in the present embodiment, PUSCH resources for retransmission of Message A (e.g., PUSCH) or PUSCH resources for transmission of an ACK/NACK signal for Message B are indicated by the UL grant included in the RAR of Message B. In other words, in the present embodiment, resources indicated in the RAR of Message B are the PUSCH resources regardless of a result of detection and decoding of Message A by base station 100. Thus, according to the present embodiment, the information indicated by the UL grant in the RAR does not need to be changed depending on the decoding result of decoding Message A by base station 100. It is thus possible to simplify the configuration of the RAR.

Exemplary embodiments of the present disclosure have been described above.

The above-described embodiments have been described in relation to the case where terminal 200 transmits the ACK/NACK signal (ACK or NACK) for Message B. However, terminal 200 may, for example, transmit a NACK to base station 100 when failing to decode Message B, and does not need to transmit an ACK to base station 100 when successfully decoding Message B.

For example, when correctly decoding the PDCCH for which Message B is scheduled and correctly decoding the MAC PDU included in Message B, terminal 200 determines that the random access operation is successfully completed. In addition, terminal 200 does not transmit the ACK to base station 100.

On the other hand, when correctly decoding the PDCCH for which Message B is scheduled but failing to correctly decode the MAC PDU included in Message B, terminal 200 transmits the NACK to base station 100 to request retransmission of Message B.

Terminal 200 may operate a Timer at the transmission timing of NACK. When successfully receiving the NACK transmitted by terminal 200, base station 100 retransmits Message B. On the other hand, when failing to receive the NACK transmitted by terminal 200, base station 100 determines that terminal 200 has successfully received Message B, and is incapable of retransmitting Message B. At this time, when the Timer operated at the transmission timing of NACK exceeds a predetermined period, terminal 200 performs the RACH operation again.

As described above, terminal 200 does not transmit the ACK. It is thus possible to reduce the overhead of the uplink resources, to reduce the power consumption of terminal 200.

Further, in the above-described embodiments, terminal 200 may, for example, transmit an ACK to base station 100 when successfully decoding Message B, and does not need to transmit a NACK to base station 100 when failing to decode Message B.

For example, when Message B includes a MAC PDU including an RAR and a MAC PDU including a message (e.g., Contention resolution MAC CE) including identification information (e.g., UE-ID) for identifying a terminal, and when terminal 200 fails to decode Message B, terminal 200 cannot identify whether or not Message B that terminal 200 attempted to decode is addressed to corresponding terminal 200. For this reason, terminal 200 does not need to transmit the NACK to base station 100.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI herein may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus. The communication apparatus may comprise a transceiver and processing/control circuitry. The transceiver may comprise and/or function as a receiver and a transmitter.

The transceiver, as the transmitter and receiver, may include an RF (radio frequency) module and one or more antennas. The RF module may include an amplifier, an RF modulator/demodulator, or the like. Some non-limiting examples of such a communication apparatus include a phone (e.g., cellular (cell) phone, smart phone), a tablet, a personal computer (PC) (e.g., laptop, desktop, netbook), a camera (e.g., digital still/video camera), a digital player (digital audio/video player), a wearable device (e.g., wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g., an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

A terminal according to an embodiment of the present disclosure includes: control circuitry, which, in operation, determines, based on a parameter configured for each of a plurality of the terminals, a resource used for transmission of a response signal for a downlink signal addressed to the plurality of terminals; and transmission circuitry, which, in operation, transmits the response signal in the resource.

In an exemplary embodiment of the present disclosure, the control circuitry determines the resource based on a value indicated by control information on the downlink signal, a resource to which the control information is allocated, and the parameter.

In an exemplary embodiment of the present disclosure, the downlink signal includes information on a response to a random access signal transmitted by each of the plurality of terminals, and the parameter is included in the information on the response.

In an exemplary embodiment of the present disclosure, the downlink signal includes information on a response to a random access signal transmitted by each of the plurality of terminals, and the parameter indicates a value associated with information included in the random access signal, the information being for identifying each of the plurality of terminals.

In one embodiment of the present disclosure, the downlink signal includes information on a response to a random access signal transmitted by each of the plurality of terminals, and the parameter indicates a value associated with an arrangement order of the information on the response corresponding to each of the plurality of terminals in the downlink signal.

In an exemplary embodiment of the present disclosure, the downlink signal includes information on a response to a random access signal transmitted by each of the plurality of terminals, and the parameter indicates a value associated with a preamble number used in the random access signal.

In an exemplary embodiment of the present disclosure, the downlink signal includes information on a response to a random access signal transmitted by each of the plurality of terminals, the random access signal including a preamble part and a data part, and the parameter indicates a value associated with a port number of a reference signal used for the data part.

In an exemplary embodiment of the present disclosure, the downlink signal includes information on a response to a random access signal transmitted by each of the plurality of terminals, and the parameter is uplink resource allocation information included in the information on the response.

In an exemplary embodiment of the present disclosure, the resource is an uplink control resource.

In an exemplary embodiment of the present disclosure, the resource is an uplink data resource.

A transmission method according to an exemplary embodiment of the present disclosure includes: determining, based on a parameter configured for each of a plurality of terminals, a resource used for transmission of a response signal for a downlink signal addressed to the plurality of terminals; and transmitting the response signal in the resource.

The disclosure of Japanese Patent Application No. 2019-061499 dated March 27, 2019 including the specification, drawings and abstract is incorporated herein by reference in its entirety.

Industrial Applicability

An exemplary embodiment of the present disclosure is useful for mobile communication systems.

Reference Signs List

100 Base station
101, 209 Controller
102 Data generator
103, 107, 110, 212, 214 Encoder
104 Retransmission controller
105, 108, 111, 213, 215 Modulator
106 Higher control signal generator
109 Downlink control signal generator
112, 216 Signal allocator
113, 217 IFFT section
114, 218 Transmitter
115, 201 Antenna
116, 202 Receiver
117, 203 FFT section
118, 204 Extractor
119 Detector
120, 205 Demodulator
121, 206, 208 Decoder
200 Terminal
207 Downlink control signal demodulator
210 PRACH preamble generator
211 ACK/NACK generator

**Claims**

1.  A terminal, comprising:

    control circuitry, which, in operation, determines, based on a parameter configured for each of a plurality of the terminals, a resource used for transmission of a response signal for a downlink signal addressed to the plurality of terminals; and
    transmission circuitry, which, in operation, transmits the response signal in the resource.

2.  The terminal according to claim 1, wherein
    the control circuitry determines the resource based on a value indicated by control information on the downlink signal, a resource to which the control information is allocated, and the parameter.

3.  The terminal according to claim 2, wherein

    the downlink signal includes information on a response to a random access signal transmitted by each of the plurality of terminals, and
    the parameter is included in the information on the response.

4.  The terminal according to claim 2, wherein

    the downlink signal includes information on a response to a random access signal transmitted by each of the plurality of terminals, and
    the parameter indicates a value associated with information included in the random access signal, the information being for identifying each of the plurality of terminals.

5.  The terminal according to claim 2, wherein

    the downlink signal includes information on a response to a random access signal transmitted by each of the plurality of terminals, and

the parameter indicates a value associated with an arrangement order of the information on the response corresponding to each of the plurality of terminals in the downlink signal.

6. The terminal according to claim 2, wherein

   the downlink signal includes information on a response to a random access signal transmitted by each of the plurality of terminals, and
   the parameter indicates a value associated with a preamble number used in the random access signal.

7. The terminal according to claim 2, wherein

   the downlink signal includes information on a response to a random access signal transmitted by each of the plurality of terminals, the random access signal including a preamble part and a data part, and
   the parameter indicates a value associated with a port number of a reference signal used for the data part.

8. The terminal according to claim 1, wherein

   the downlink signal includes information on a response to a random access signal transmitted by each of the plurality of terminals, and
   the parameter is uplink resource allocation information included in the information on the response.

9. The terminal according to claim 8, wherein
   the resource is an uplink control resource.

10. The terminal according to claim 8, wherein
    the resource is an uplink data resource.

11. A transmission method, comprising:

    determining, based on a parameter configured for each of a plurality of terminals, a resource used for transmission of a response signal for a downlink signal addressed to the plurality of terminals; and
    transmitting the response signal in the resource.

FIG. 1

FIG. 2

200

209 | 218

```
┌─────────────┐       ┌─────────────┐
│ Controller  │──────▶│ Transmitter │
└─────────────┘       └─────────────┘
```

FIG. 3

FIG. 4

EP 3 952 501 A1

FIG. 5

FIG. 6

FIG. 7

EP 3 952 501 A1

FIG. 8

EP 3 952 501 A1

| MAC subPDU1 (BI only) | MAC subPDU2 (RAPID only) | MAC subPDU3A (RAPID and RAR) | MAC subPDU3B (Contention resolution MAC CE) | MAC subPDU4A (RAPID and RAR) | MAC subPDU4B (Contention resolution MAC CE) | ... |
|---|---|---|---|---|---|---|

FIG. 9

| MAC subPDU1 (BI only) | MAC subPDU2 (RAPID only) | MAC subPDU3A (RAPID and RAR) | MAC subPDU3B (Contention resolution MAC CE) | MAC subPDU3C (RRC message) | MAC subPDU4A (RAPID and RAR) | MAC subPDU4B (Contention resolution MAC CE) | MAC subPDU4C (RRC message) | ... |
|---|---|---|---|---|---|---|---|---|

FIG. 10

## INTERNATIONAL SEARCH REPORT

| International application No. |
| --- |
| PCT/JP2019/049540 |

**A. CLASSIFICATION OF SUBJECT MATTER**
Int. Cl. H04W72/04(2009.01)i, H04W74/08(2009.01)i
FI: H04W74/08, H04W72/04 136, H04W72/04 137

According to International Patent Classification (IPC) or to both national classification and IPC

**B. FIELDS SEARCHED**

Minimum documentation searched (classification system followed by classification symbols)
Int. Cl. H04W72/04, H04W74/08

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2018-528694 A (SONY CORP.) 27 September 2018, abstract, claims 1, 12, paragraphs [0028]-[0039], [0042]-[0047], fig. 3-5, 7-10 | 1-3, 9-11 |
| Y | | 4-8 |
| X | WO 2018/088415 A1 (NTT DOCOMO INC.) 17 May 2018, abstract, claims 1-4, paragraphs [0042]-[0113], fig. 3-7 | 1-4, 9-11 |
| Y | | 5-8 |
| Y | JP 2017-63323 A (NTT DOCOMO INC.) 30 March 2017, abstract, claims 1, 4, 5, paragraphs [0036]-[0039], [0064]-[0070], fig. 2, 6 | 5 |
| Y | WO 2017/026433 A1 (NTT DOCOMO INC.) 16 February 2017, abstract, claim 1, paragraphs [0035]-[0038], fig. 2, 3A | 6, 8 |

☒ Further documents are listed in the continuation of Box C.    ☒ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 17.03.2020 | 24.03.2020 |

| Name and mailing address of the ISA/ | Authorized officer |
| --- | --- |
| Japan Patent Office 3-4-3, Kasumigaseki, Chiyoda-ku, Tokyo 100-8915, Japan | Telephone No. |

Form PCT/ISA/210 (second sheet) (January 2015)

28

**INTERNATIONAL SEARCH REPORT**

| International application No. |
| --- |
| PCT/JP2019/049540 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | WO 2018/128192 A1 (NTT DOCOMO INC.) 12 July 2018, abstract, paragraphs [0024]-[0029], fig. 2, 3 | 7 |

Form PCT/ISA/210 (continuation of second sheet) (January 2015)

INTERNATIONAL SEARCH REPORT

Information on patent family members

| International application No. |
| --- |
| PCT/JP2019/049540 |

| Patent Documents referred to in the Report | Publication Date | Patent Family | Publication Date |
| --- | --- | --- | --- |
| JP 2018-528694 A | 27.09.2018 | US 2018/0235003 A1<br>abstract, claims 1,<br>12, paragraphs<br>[0038]-[0049],<br>[0052]-[0057], fig.<br>3-5, 7-10<br>WO 2017/050868 A1<br>CN 108029120 A | |
| WO 2018/088415 A1 | 17.05.2018 | US 2019/0268946 A1<br>abstract, claims 1-4,<br>paragraphs [0054]-<br>[0127], fig. 3-7<br>EP 3541138 A1<br>CN 110169184 A | |
| JP 2017-63323 A | 30.03.2017 | US 2018/0263061 A1<br>abstract, claims 4,<br>5, paragraphs [0053]-<br>[0057], [0081]-<br>[0087], fig. 2, 6<br>WO 2017/051847 A1<br>EP 3352520 A1<br>CN 108141878 A<br>KR 10-2018-0058715 A<br>JP 6093827 B1 | |
| WO 2017/026433 A1 | 16.02.2017 | US 2018/0241511 A1<br>abstract, claim 1,<br>paragraphs [0053]-<br>[0056], fig. 2, 3A<br>EP 3337231 A1 | |
| WO 2018/128192 A1 | 12.07.2018 | US 2019/0342822 A1<br>abstract, paragraphs<br>[0044]-[0050], fig.<br>2, 3<br>EP 3567929 A1<br>CN 110169136 A | |

Form PCT/ISA/210 (patent family annex) (January 2015)

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- JP 2019061499 A

## Non-patent literature cited in the description

- NR; Physical channels and modulation (Release 15). *3GPP TS 38.211 V15.4.0,* December 2018
- NR; Multiplexing and channel coding (Release 15). *3GPP TS 38.212 V15.4.0,* December 2018
- NR; Physical layer procedure for control (Release 15). *3GPP TS 38.213 V15.4.0,* December 2018
- NR; Physical layer procedures for data (Release 15). *3GPP TS 38.214 V15.4.0,* December 2018
- NR; NR and NG-RAN overall description; Stage 2 (Release 15). *3GPP, TS38.300 V15.4.0,* December 2018
- NR; Medium access control (MAC) protocol specification (Release 15). *3GPP, TS38.321 V15.4.0,* December 2018
- NR; Radio resource control (RRC) protocol specification (Release 15). *3GPP, TS38.331 V15.4.0,* December 2018
- **B. BERTENYI ; S. NAGATA ; H. KOOROPATY ; X. ZHOU ; W. CHEN ; Y. KIM ; X. DAI ; X. XU.** 5G NR radio interface. *Journal of ICT,* 2018, vol. 6,2, 31-58
- New work item: 2-step RACH for NR. *RP-182881,* December 2018